# EUROPEAN PATENT APPLICATION

(11) **EP 1 892 076 A1**
(43) Date of publication of application: **27.02.2008**
(21) Application number: 06757281.8
(22) Date of filing: 13.06.2006
(51) Int. Cl.: B29C 59/04, B29C 59/00, G02B 5/18, B29L 11/00

(54) **PATTERN COPYING APPARATUS, PATTERN COPYING METHOD, AND PEELING ROLLER**

(30) Priority: 16.06.2005 JP 2005176352; 04.07.2005 JP 2005194830
(71) Applicant: Dai Nippon Printing Co., Ltd., Tokyo 162-8001 (JP)
(72) Inventor: Matsuyama, Tetsuya Dai Nippon Printing Co., Ltd., Tokyo; 1628001 (JP)
(74) Representative: Needle, Jacqueline
(86) International application number: PCT/JP2006/311796
(87) International publication number: WO 2006/134892

(57) **Abstract**

There is provided a pattern copying apparatus of copying an optical diffraction structure to heated resin layer at high copying velocity while maintaining a product quality and also a peeling roller used for the pattern copying apparatus.

There is provided a pattern copying apparatus of forming a pattern constituting an optical diffraction structure provided on the outer circumference of an embossing roller 12 on a heat-moldable resin layer 22 of an optical diffraction structure-forming film 20 having a base film 21 and the resin layer formed thereon, by heating the embossing roller 12, winding the optical diffraction structure-forming film 20 on the embossing roller 12, and peeling off the optical diffraction structure-forming film 20 from the embossing roller 12 as winding the film 20 on a peeling roller 15-1. The apparatus comprises a cooling device 91 of cooling at least part of the outer circumference of the peeling roller 14 so that the surface temperature of the peeling roller 15-1 is set to or below the temperature to make the resin layer 22 harden.

## Description

### Technical Field

The present invention relates to a pattern copying apparatus for copying a pattern constituting a optical diffraction structure, a pattern copying method, and a peeling roller mounted in the pattern copying apparatus.

### Background Art

Pattern copying methods of copying an concavo-convex pattern formed on the surface of an embossing roller to a resin layer by applying thermocompression to an optical diffraction structure where the resin layer having heatmoldability laminated on a base film and the embossing roller by a thermocompressing roller are already known (see, for example, Patent Document 1) . In the conventional copying methods, the resin layer is softened by a heated thermocompressing roller and cooled by a cooled embossing roller. In addition, a method of applying heat to the embossing roller is also considered.

Patent Document 1: Japanese Patent Application Laid-Open No. 61-156273

### Disclosure of the Invention

### Problems to be Solved by the Invention

However, in accelerating the copying velocity by increase of temperature for heating the optical diffraction structure-forming film, there is a concern about heat resistance of the base film, because the optical diffraction structure-forming film is heated from the base film side in the conventional copying methods. In addition, as the resin layer is heated via the base film, a heating efficiency for the resin layer is bad, then, the base filmmay sometimes suffer significant thermal damage. The method of heating the embossing roller is known, but in such a case, it is hard to cool the resin layer, which causes problems such as residual of the resin on the embossing roller to bring deterioration in product quality.

Also in the conventional methods, the heating efficiency or cooling efficiency to the resin layer of the optical diffraction structure-forming film is bad, because it is needed to heat or cool a roller constituted by low-heat conductive resin to soften or harden the resin instantaneously only at the moment of passing through the contact point.

Accordingly, an object of the present invention is to provide a pattern copying apparatus that allows copying of a pattern constituting a optical diffraction structure onto a heated resin layer at high copying velocity while preserving its product quality and a peeling roller being used in the pattern copying apparatus. Another object of the present invention is to provide a pattern copying method and a pattern copying apparatus of heating and cooling the optical diffraction structure-forming film efficiently.

### Means for Solving the Problems

A first pattern copying apparatus according to the present invention, which solves the problems above, is a pattern copying apparatus of forming on a resin layer having a heat-moldable property, a pattern constituting an optical diffraction structure provided on an outer circumference of an embossing roller, by heating the embossing roller, winding on the embossing roller, an optical diffraction structure-forming film having the resin layer laminated on a base film, and peeling off the optical diffraction structure-forming film from the embossing roller as winding the optical diffraction structure-forming film on the peeling roller, wherein the apparatus comprises a cooling device for cooling at least part of the outer circumference of the peeling roller so that the surface temperature of the peeling roller is set to or below the temperature to make the resin layer harden.

Because of With the first pattern copying apparatus according to the present invention, it is possible to improve the peeling property of the resin layer by hardening the resin layer, because the peeling roller is cooled to or below the temperature to make the resin layer harden. In addition, direct cooling of the outer circumference of the peeling roller is more effective than cooling from inside of the peeling roller. Thus according to the present invention it is possible to improve a pattern copying velocity while maintaining product quality. The entire outer circumference or only part of it may be cooled by the cooling device. The peeling roller can be conventionally-configured.

The cooling device may be a support roller being cooled and being installed in contact with the outer circumference of the peeling roller. Thus, it is possible to remove the heat on the outer circumference of the peeling roller with the cooled support roller actively. The conventional method may be employed as the method of cooling the support roller such as cooling with refrigerant.

Alternatively, thecoolingdevicemaybeacoldair-cooling device which blows cold air onto the outer circumference of the peeling roller. In such a case, it is possible to remove the heat on the outer circumference of the peeling roller actively by blowing cold air onto the outer circumference of the peeling roller.

A peeling roller according to the present invention, which solves the problems above, is a peeling roller that is installed in a pattern copying apparatus of forming on a heat-moldable resin layer, a pattern constituting an optical diffraction structure provided on an outer circumference of an embossing roller, by heating the embossing roller, winding on the embossing roller, an optical diffraction structure-forming film having the resin layer laminated on a base film, and that makes the optical diffraction structure-forming film peel off from the embossing roller by winding thereon, while being cooled from inside thereof with a refrigerant, wherein a surface temperature of the peeling roller is controlled to or below a temperature to make the resin layer harden under a condition of a temperature of the refrigerant being at and above a degree that the piping is not frozen.

Because of the peeling roller according to the present invention, as the peeling roller is cooled from inside thereof with a refrigerant, it is possible to harden the resin layer softened by heating. In addition, when the peeling roller is cooled with a refrigerant, excessive cooling of the refrigerant causes problems of freezing and dewing of the piping for the refrigerant, but it is possible to maintain a product quality and improve copying velocity, independently of the refrigerant temperature because the surface temperature of the peeling roller is cooled to or below the temperature to make the resin layer harden even with a refrigerant at a temperature of degree not freezing the piping. The method of cooling the embossing roller from inside with a refrigerant may be a conventional method.

Specifically of the peeling roller according to the present invention, a surface of the outer circumference may be constituted by metal so that the surface temperature is controlled to or below the temperature to make the resin layer harden, or alternatively, thickness of resin constituting the outer circumference may be made to be thin so that the surface temperature is set to or below the temperature to make the resin layer harden. Conventional peeling rollers are constituted by resin having a low heat-conductive property. However, as the peeling roller in the mentioned configuration has a higher heat-conductive property, the cooling efficiency of the peeling roller can be improved.

The pattern copying method according to the present invention, which solves the problems above, is a pattern copying method of forming on a resin layer having a heat-moldable property, a pattern constituting an optical diffraction structure provided on the outer circumference of an embossing roller, by winding an optical diffraction structure-forming film having the resin layer laminated on a base film on the embossing roller in a state that the resin layer is softened by heating, and peeling off the wound optical diffraction structure-forming film from the embossing roller, wherein the optical diffraction structure-forming film is heated in a non-contact way by a heating device so that the resin softens at a moment when the optical diffraction structure-forming film is wound on the embossing roller and the optical diffraction structure-forming film is cooled in a non-contact way by a cooling device so that the resin hardens at a moment when the optical diffraction structure-forming film is peeled off from the embossing roller.

By the pattern copying method according to the present invention, it is possible to make the resin soften and become shapable by heating the optical diffraction structure-forming film and the surface of embossing roller in non-contact way at the moment when the film is wound on the embossing roller, and at the moment when the film is peeled, it is possible to make the resin harden to peel off the pattern with no damage by cooling the optical diffraction structure-forming film in non-contact way by the cooling device. Conventionally, the optical diffraction structure-forming film has been heated or cooled by heating or cooling a roller having a bad heat conductivity and contacting the roller to the optical diffraction structure-forming film, but the present invention eliminates the need for heating or cooling of the roller and makes a heating and cooling efficiency of the optical diffraction structure-forming film get higher than that of the conventional pattern copying methods. Accordingly, it is possible to accelerate pattern copying while maintaining a product quality, without problems about the damage of the base film and others by high heat of the embossing roller and the residual of resin on the embossing roller caused by insufficient cooling of the resin layer.

The phrase "the resin softens at a moment when the optical diffraction structure-forming film is wound on the embossing roller" means that the resin has softened by the moment when the resin layer is wound on the embossing roller, and includes both cases that the resin softens instantly at the moment of winding and that the resin softens before at the moment of winding. Alternatively, the phrase "the resin hardens at a moment when the optical diffraction structure-forming film is peeled off" means that the resin has hardened by the moment when the resin layer is peeled off, and includes both cases that the resin hardens instantly at the moment of peeling and that the resin hardens before at the moment of peeling.

The method of heating or cooling the optical diffraction structure-forming film in non-contact way includes a method of changing the ambient temperature of the optical diffraction structure-forming film or a method of changing a spot temperature of the optical diffraction structure-forming film by using infrared light, micro wave and the like. The optical diffraction structure means a fine concavo-convex pattern causing optical interference and includes hologram and diffraction grating.

an ambient temperature of the optical diffraction structure-forming film at a moment when the optical diffraction structure-forming film is wound on the embossing roller may be set to or above the temperature to make the resin soften by the heating device and an ambient temperature of the optical diffraction structure-forming film at a moment when the optical diffraction structure-forming film is peeled off from the embossing roller may be set to or below the temperature to make the resin harden by the cooling device. The heating or cooling of the optical diffraction structure-forming film by changing the ambient temperature makes the resin layer sufficiently shapable or peelable, especially when the optical diffraction structure-forming film is thin and has a low heat capacity. The ambient temperature can be increased with a conventional oven to raise the temperature of circulating wind by a heater or steam and can be lowered with a conventional cooler using some refrigerant.

the resin may be softened by blowing of hot air by the heating device to the optical diffraction structure-forming film at a moment of being wound on the embossing roller, and the resin may be hardened by blowing of cold air by the cooling device to the optical diffraction structure-forming film at a moment of being peeled off from the embossing roller. Thus, it is possible to put the pattern of the embossing roller into the resin softened by blowing the hot air to the position where the optical diffraction structure-forming film is wound on the embossing roller, and it is possible to peel off the resin layer sufficiently hardened by blowing the cold air to the position where the optical diffraction structure-forming film is peeled off from the embossing roller. As it is possible to limit the regions of heating and cooling, the heating efficiency and the cooling efficiency can be improved further more. It is preferable to make the heating device blow hot air from the side allowing simultaneous heating of the embossing roller surface, in order no to cool the resin by the surface of the embossing roller at the moment of winding.

The temperature of the hot air to be blown may be 5°C to 10°C higher than a softening temperature of the resin and the temperature of the cold air to be blown may be 5°C to 10°C lower than a softening temperature of the resin. It is possible to make the resin in the resin layer soften sufficiently with the hot air at the above range of temperature and to make the softened resin harden sufficiently with the cold air at the above range of temperature.

In addition, the present invention may be realized as a second pattern copying apparatus of forming on a resin layer having a heat-moldable property, a pattern constituting an optical diffraction structure provided on the outer circumference of an embossing roller, by winding an optical diffraction structure-forming film having the resin layer laminated on a base film on the embossing roller in a state that the resin layer is softened by heating, and peeling off the wound optical diffraction structure-forming film from the embossing roller, the apparatus comprising a heating device of heating the optical diffraction structure-forming film in a non-contact way so that the resin softens at a moment when the optical diffraction structure-forming film is wound on the embossing roller and a cooling device of cooling the optical diffraction structure-forming film in a non-contact way so that the resin hardens at a moment when the optical diffraction structure-forming film is peeled off from the embossing roller.

### Effect of the Invention

As described above, the present invention provides, a first pattern copying apparatus and the like allowing acceleration of copying velocity while maintaining a product quality even when a pattern constituting an optical diffraction structure is copied to a heated resin layer, by cooling the outer circumference of the peeling roller or by using a peeling roller having a surface temperature thereof not higher than the temperature to make the resin layer harden at the peeling point even if using a refrigerant at a temperature not freezing the piping.

The present invention also provides a copying method and the like allowing efficient heating and cooling of an optical diffraction structure-forming film, by softening the resin of the resin layer by heating in a non-contact way the optical diffraction structure-forming film at the moment of being wound on the embossing roller, and hardening the resin of the resin layer by cooling in a non-contact way the optical diffraction structure-forming film at the moment of being peeled off from the emboss roller.

### Brief Description of the Drawings

[Fig. 1] a schematic view illustrating the configuration of the first pattern copying apparatus as an example of the apparatus according to the present invention.
[Fig. 2] a view of the optical diffraction structure-forming film used for the pattern copying apparatus shown in Fig. 1.
[Fig. 3] a view illustrating the first embodiment for cooling the peeling roller.
[Fig. 4] a view illustrating the second embodiment for cooling the peeling roller.
[Fig. 5] a view illustrating the third embodiment for cooling the peeling roller.
[Fig. 6] a view illustrating the fourth embodiment for cooling the peeling roller.
[Fig. 7] a view illustrating an example of the optical diffraction structure-forming film according to the present invention.
[Fig. 8] a view illustrating an example of the second pattern copying apparatus according to the present invention.
[Fig. 9] a magnified view of the region close to an embossing roller in the pattern copying apparatus shown in Fig. 8.
[Fig. 10] a view illustrating the chambers formed for the pattern copying apparatus.

### Best Mode for Carrying out the Invention

### (A common embodiment for from first to fourth embodiments)

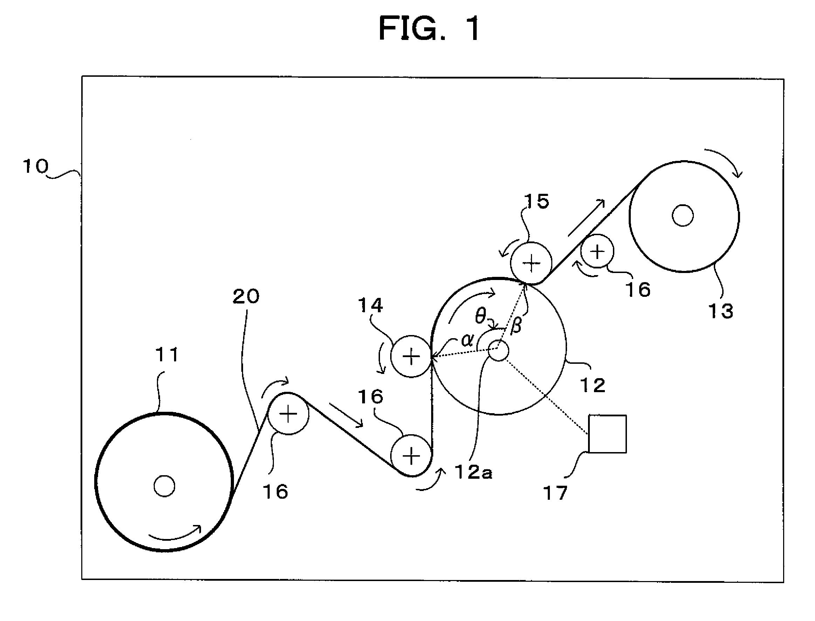

The first to fourth embodiments with respect to the first pattern copying apparatus and the peeling roller according to the present invention will be described. Fig. 1 is a view of an example of a pattern copying apparatus 10 realizing the pattern copying method according to the present invention. The pattern copying apparatus 10 has, between a feeding roller 11 for feeding an optical diffraction structure-forming film 20 at a particular velocity and a winding roller 13 for winding the optical diffraction structure-forming film 20 where patterns are copied, an embossing roller 12 having on the surface the pattern that the optical diffraction structure is copied, a compressing roller 14 for compressing the optical diffraction structure-forming film 20 to the embossing roller 12 at a compressing point α, and a peeling roller 15 for peeling the optical diffraction structure-forming film 20 from the embossing roller 12 at a peeling point β by winding the optical diffraction structure-forming film 20 thereon.

Each roller 11 to 15 is rotatable in a direction to make the optical diffraction structure-forming film 20 supplied from the feeding roller 11 proceed to the winding roller 13. Plural guide rollers 16, ..., 16 are arranged as needed for guiding the optical diffraction structure-forming film 20 and for prevention of sagging. The number of the guide rollers 16, ..., 16 may be determined arbitrarily, not limited to the number indicated in Fig. 1.

The optical diffraction structure-forming film 20 supplied from the feeding roller 11 advances to the compressing point α as guided by guide rollers 16, 16 and is compressed onto the embossing roller 12 at the composing point α by the composing roller 14. The composed optical diffraction structure-forming film 20 advances to the peeling point β while being wound on the embossing roller 12 according to revolution of the embossing roller 12, and peeled off from the embossing roller 12 at the peeling point β by the peeling roller 15. Thereby, the peeling roller 15 determines the winding angle θ of the optical diffraction structure-forming film 20 to the embossing roller 12. The optical diffraction structure-forming film 20 peeled off from the embossing roller 12 is guided by a guide roller 16 to be rolled up on the winding roller 13.

In the pattern copying apparatus 10, a heating device 17 for heating the embossing roller 12 is connected to the shaft 12a of the embossing roller 12. The heating device 17 is, for example, a hot-water circulation unit (circulator). If a temperature in the hot water circulation unit is higher than 80°C, oil is used as a medium. In the present embodiment, the surface of the embossing roller 12 is heated by the heating device 17 to approximately 60°C to 120°C.

In addition, the surface of the compressing roller 14 is also heated by a heating device (not shown) connected to the shaft of the composing roller to approximately 60°C to 120°C. It is possible to restrict a heat loss by heat transfer caused by temperature difference and to improve heating efficiency, by heating the embossing roller 12 and the crimping roller 14 respectively to temperatures similar to each other. In the present invention, the peeling roller 15 is cooled, and the cooling method will be described below. The operation of each component in the pattern copying apparatus 10, including cooling method for the peeling roller described below, is controlled by a control unit not shown in the figure.

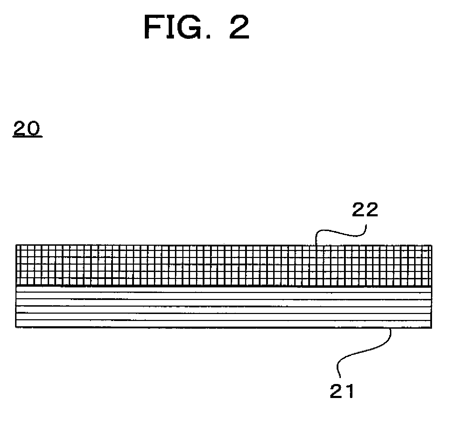

As shown in Fig. 2, the optical diffraction structure-forming film 20 has a base film 21 and a resin layer 22 constituted by a heat-moldable resin laminated thereon. A PET (polyethylene terephthalate) film having a thickness of 6 µm is used as the base film 21 and a film of a resin having a softening point of 60°C or higher is used as the resin layer 22 in this embodiment. The side of the resin layer 22 is compressed onto the surface of the embossing roller 12, and the pattern formed on the surface of the embossing roller 12 is transferred onto the resin layer 22. The material constituting each layer 21 or 22 is arbitrary, and any conventional resin may be used.

### (First embodiment)

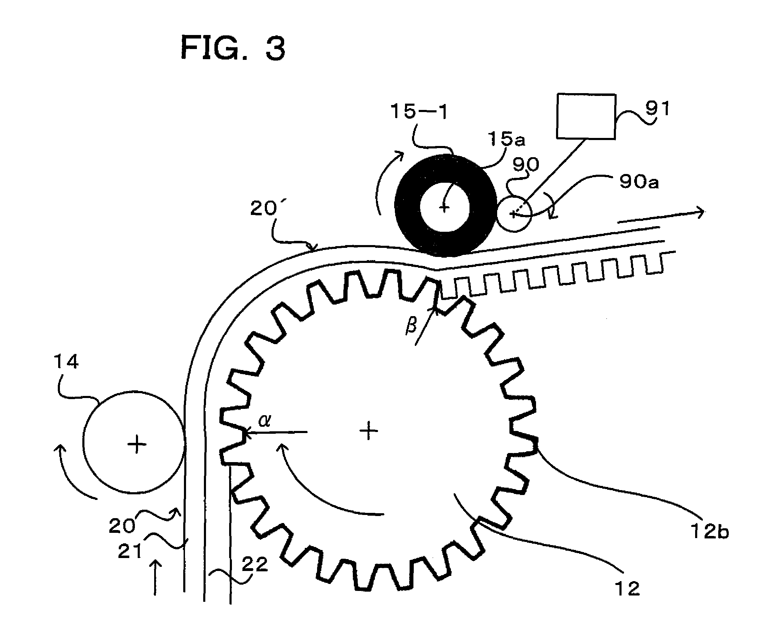

Hereinafter, the method of cooling a peeling roller 15-1 in the first embodiment will be described with reference to Fig. 3. In the present embodiment, a support roller 90 being cooled is provided in contact with an outer circumference of the peeling roller for cooling the outer circumference of the peeling roller 15-1. Thereby, it is possible to forcely remove heat of the outer circumference of the peeling roller 15-1. This cooling method is preferable, when the temperature of the optical diffraction structure-forming film 20 at the moment of peeling should be kept at or below room temperature. A conventional construction may be employed to the peeling roller 15-1 and the support roller 90.

The support roller 90 is cooled by a cooling device 91 connected to the shaft 90a thereof. A conventional construction may be employed to the cooling device 91, such as a rotary joint, a hose, a cooling water-circulating device, and the like. The location and the size of the support roller 90 can be set appropriately so that the surface of the peeling roller 15-1 at the peeling point β is cooled to a degree of making the resin layer 22 harden. The number of support rollers 90 is not limited to one but plural of them may be used.

The optical diffraction structure-forming film 20 supplied from the feeding roller 11 is sent to the compressing roller 14 and compressed onto the surface of the embossing roller 12 at the compressing point α. At the moment, the base film 21 is heated by the heated composing roller 14, and the resin layer 22 is heated directly by the embossing roller 12 that is heated to the same degree of the composing roller 14.

As a result, the resin layer 22 softens as heated to its softening point, which brings a state that the pattern 12b is formed on the resin layer 22. As described above, the optical diffraction structure-forming film 20' having the pattern 12b formed thereon advances in a state of being wound on the embossing roller 12 to the peeling point β according to the revolution of the embossing roller 12.

The optical diffraction structure-forming film 20' is cooled by the peeling roller 15-1 at the moment of being peeled at the peeling point β. The outer circumference of the peeling roller 15-1 is cooled by the support roller 90, as described above. Then, the resin layer 22 hardens at the peeling point β. Thereby, the optical diffraction structure-forming film 20' is peeled off from the embossing roller 12 without residual resin. Onto the resin layer 22 of the optical diffraction structure-forming film 20' peeled off, the pattern 12b is transferred. The transfer of the pattern 12b onto the resin layer 22 as mentioned above allows copying of the pattern 12b onto the optical diffraction structure-forming film 20.

### (Second embodiment)

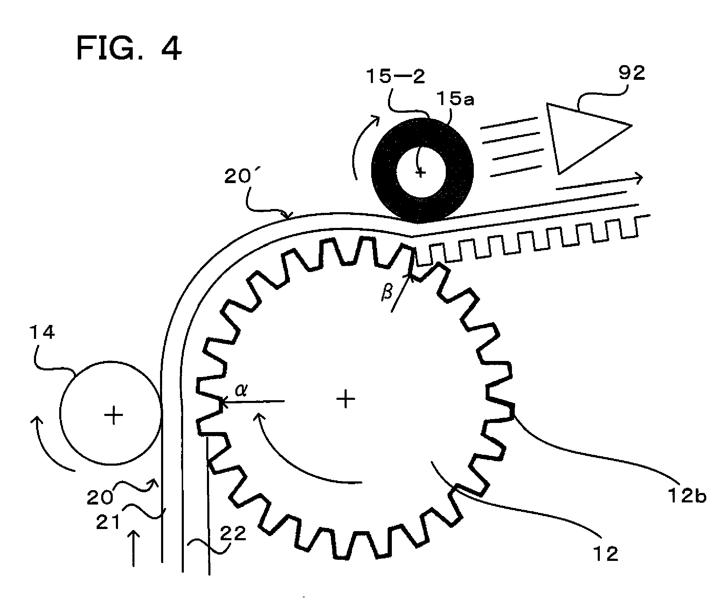

The method of cooling a peeling roller 15-2 in the second embodiment will be described with reference to Fig. 4. In the present embodiment, a cold-air device 92 blowing cold air on at least a part of the outer circumference of the peeling roller 15-2 for cooling the outer circumference. Because of that, it is possible to remove forcely the heat on the outer circumference of the peeling roller 15-2. Accordingly, it is preferable when the temperature of the resin layer 22 at the moment of peeling should be kept at or below room temperature. A conventional construction may be employed to the peeling roller 15-2 and the cold-air device 92.

The pattern 12b of the embossing roller 12 is copied in a similar manner to the first embodiment, except that the outer circumference of the peeling roller 15-2 is cooled by using the cold air-cooling device 92. Plural cold air-cooling devices 92 may be used, and the location and the temperature of the cold air-cooling device 92 are so determined properly that the surface temperature of the peeling roller 15-2 at the peeling point β reduces to a degree of making the resin layer 22 harden.

### (Third embodiment)

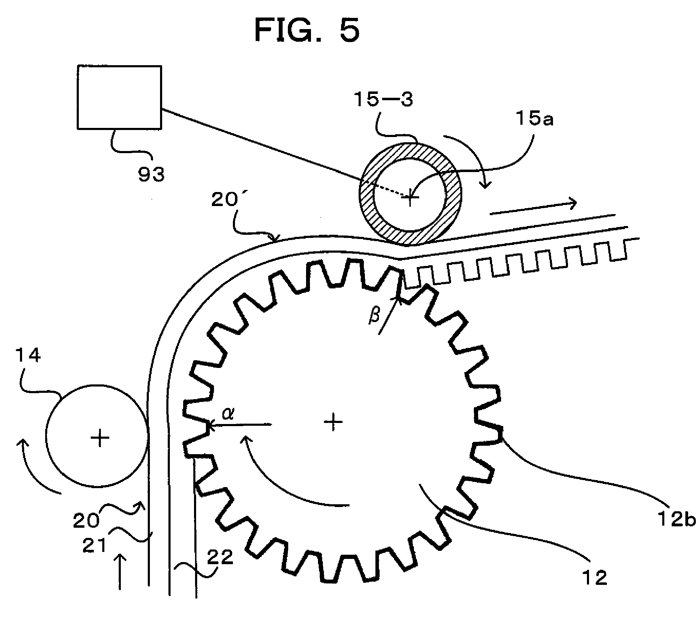

The method of cooling a peeling roller 15-3 in the third embodiment will be described with reference to Fig. 5. In the present embodiment, a peeling roller-cooling device 93 is connected to the shaft 15a of the peeling roller 15-3 to cool the peeling roller 15-3 from inside. A conventional construction may be employed to as the peeling roller-cooling device 93, such as a rotary joint, a hose, a cooling water-circulating device, and the like. The refrigerant supplied from the peeling roller-cooling device 93 into the shaft 15a is cooled to a degree of not freezing a piping for the refrigerant, for example, approximately -10°C.

The outer circumference of the peeling roller 15-3 in the present embodiment is made of metal. Because of that, the peeling roller 15-3 has a higher heat conductivity than conventional cases. Accordingly, the outer circumference of the peeling roller 15-3 can be cooled sufficiently, even if cooled by the peeling roller-cooling device 93 from inside. The thickness of the metal outer circumference and the kind of the metal can be set appropriately so that the surface temperature of the peeling roller 15-3 at the peeling point β becomes a degree of making the resin layer 22 harden.

Accordingly, although there were problems of freezing and dewing of the piping when the refrigerant is cooled to excessive low temperature, according to the peeling roller 15-3 of the present embodiment, it is possible to obtain peeling property of the resin layer 22 independently of the refrigerant temperature. The pattern 12b of the embossing roller 12 is copied in a similar manner to the first embodiment, except of the configuration of the peeling roller 15-3 and the method of cooling the peeling roller 15-3.

### (Fourth embodiment)

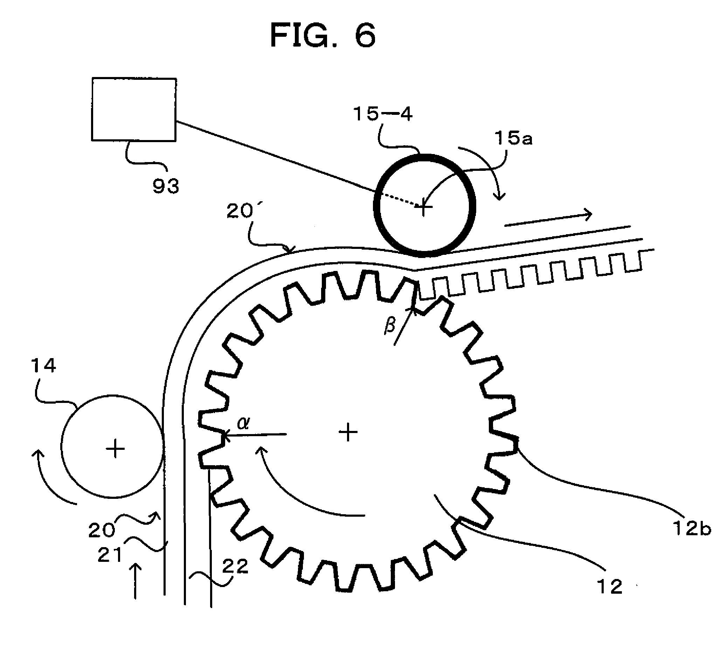

The method of cooling a peeling roller 15-4 in the fourth embodiment will be described with reference to Fig. 6. In the present embodiment, similarly to the third embodiment, a peeling roller-cooling device 93 is connected to the shaft 15a of the peeling roller 15-4 to cool the peeling roller 15-4 from inside. A conventional construction may be employed to the peeling roller-cooling device 93, such as a rotary joint, a hose, a cooling water-circulating device, and the like. The refrigerant supplied from the peeling roller-cooling device 93 to the shaft 15a is cooled to a degree of not freezing the piping for the refrigerant, for example, approximately -10°C.

In the peeling roller 15-4 of the present embodiment, the resin layer 22 constituting the outer circumference thereof has a thickness thinner than a conventional resin layer. Therefore, the outer circumference of the peeling roller 15-4 can be cooled sufficiently, even if the peeling roller is cooled by the peeling roller-cooling device 93 from inside. The thickness of the resin layer 22 and the materials constituting the resin layer 22 may be set appropriately so that the surface temperature of the peeling roller 15-4 becomes a degree of making the resin layer 22 harden.

Accordingly, although there were problems of freezing and dewing of the piping when the refrigerant is cooled to excessive low temperature, according to the peeling roller 15-4 of the present embodiment, it is possible to obtain peeling property of the resin layer 22 independently of the refrigerant temperature. The pattern 12b of the embossing roller 12 is copied in a similar manner to the first embodiment, except that the configuration of the peeling roller 15-4 and the method of cooling the peeling roller 15-4 are modified.

The present invention is not limited to the embodiments described above and may be performed in any other embodiments. For example, for cooling the peeling roller 15, the external diameter of the peeling roller 15 may be made larger than conventional cases. Thereby, it takes longer for the outer circumference to ride an entire loop. Because of that, it takes longer between the moment when the surface of the peeling roller contacts with the optical diffraction structure-forming film 20' and the moment when the surface contacts with the optical diffraction structure-forming film 20' again, that is, it takes longer for the surface to contact with open air. Accordingly, it is easier to cool the outer circumference. Alternatively, the first or second embodiment wherein a cooling devices for cooling the outer circumference of the peeling roller is used and the third or fourth embodiment wherein the peeling roller is cooled from inside may be combined.

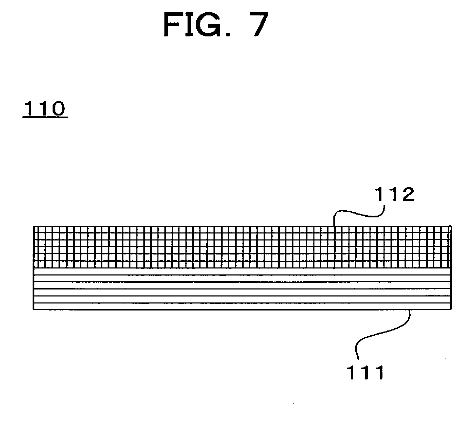

The pattern copying method according to the present invention and the configuration of the second pattern copying apparatus will be described below. Fig. 7 is a view of an example of the optical diffraction structure-forming film 110 according to the present invention. The optical diffraction structure-forming film 110 has a base film 111 and a resin layer 112 constituted by a heat-moldable resin laminated thereon. Conventional materials and conventional resin may be employed to the base film 111 and the resin layer 112 respectively. In the present embodiment, a PET (polyethylene terephthalate) film having a thickness of 6 µm is used as the base film 111 and a resin having a softening point of 60°C or higher is used for the resin layer 112.

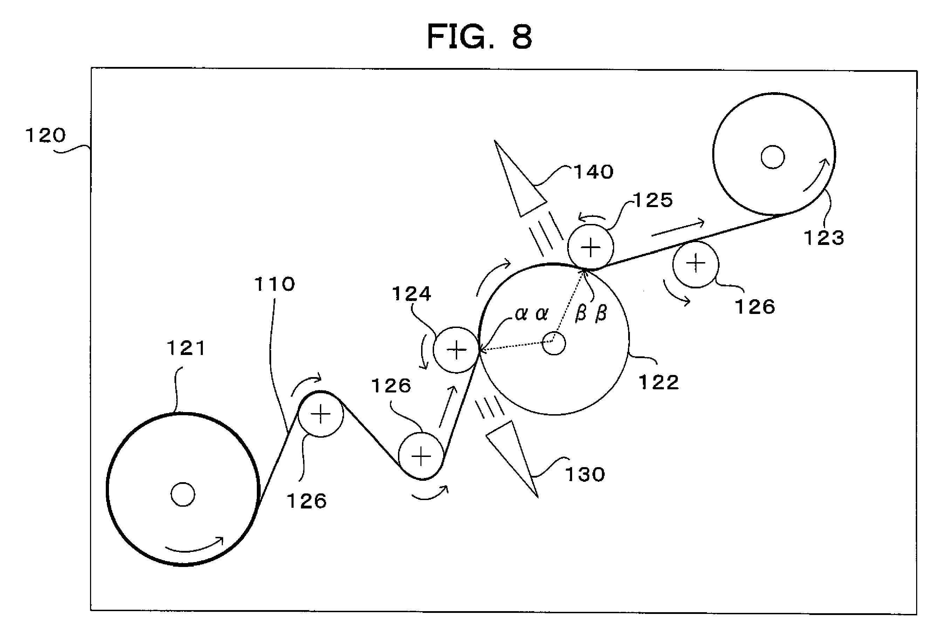

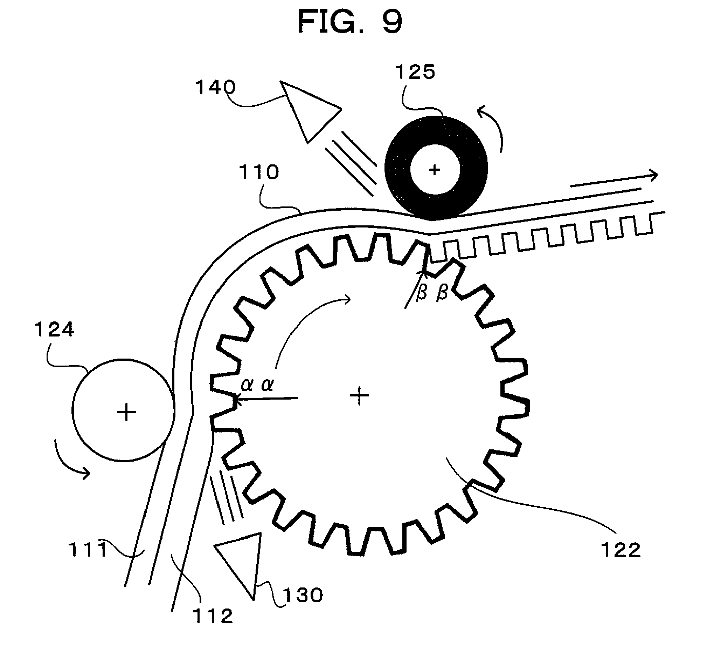

The method of copying a pattern onto the resin layer 112 of the optical diffraction structure-forming film 110 by a pattern copying apparatus 120 will be described with reference to Figs. 8 and 9. The pattern copying apparatus 120 in the present embodiment has a feeding roller 121 for feeding the optical diffraction structure-forming film 110 at a particular velocity and a winding roller 123 for rolling up the ptical diffraction structure-forming film 110 having the copied pattern, and between them, has an embossing roller 122 having a pattern of the optical diffraction structure to be copied on the surface thereof, a compressing roller 124 for compressing the optical diffraction structure-forming film 110 to the embossing roller 122 at the compressing point αα, and a peeling roller 125 for peeling off the optical diffraction structure-forming film 110 from the embossing roller 122 at the peeling point ββ.

Each roller 121 to 125 is rotatable in a direction to make the optical diffraction structure-forming film 110 supplied from the feeding roller 121 proceed to the winding roller 123. Plural guide rollers 126, ..., 126 are arranged as needed for guiding the optical diffraction structure-forming film 110 and for prevention of sagging. The number of the guide rollers 126, ..., 126 may be determined arbitrarily, but not limited to the number indicated in Fig. 1.

The pattern copying apparatus 120 has additionally a hot air-supplying device 130 as a heating device and cold air-supplying device 140 as a cooling device. The hot air-supplying device 130 is a drier blowing hot air to the compressing point αα at the moment when the optical diffraction structure-forming film 110 is compressed to be wound on the embossing roller 122 (at the moment of compressing), so that the resin layer 112 soften to a degree of performing a forming property at the crimping point αα. The hot air-supplying device 130 of the present embodiment is installed so that the hot air is blown to the resin layer 112 side of optical diffraction structure-forming film 110 wound on the embossing roller 122 at the compressing point αα. Thereby, the surfaces of the resin layer 112 and the embossing roller 122 are heated by the hot air, and the ambient temperature also increases simultaneously. The temperature of the hot air supplied from the hot air-supplying device 130 is preferably, approximately 5°C to 10°C higher than the softening temperature of the resin constituting the resin layer 112, and is set appropriately in consideration of a heat capacity of the resin of the resin layer 112.

The cold air-supplying device 140 blows cold air to the peeling point ββ at the moment when the optical diffraction structure-forming film 110 is peeled off from the embossing roller, so that the resin hardens to a degree that the resin layer 112 can be peeled at the peeling point ββ. The cold air-supplying device 140 of the present embodiment is installed so that cold air is blown to the side of the base film 111 of the optical diffraction structure-forming film 110 wound on the embossing roller 122 at the peeling point ββ. Because of that, the surfaces of the base film 111 and the peeling roller 125 are cooled by the cold air and the ambient temperature decreases simultaneously. The temperature of the cold air supplied from the cold air-supplying device 140 is preferably, approximately 5°C to 10°C lower than the softening temperature of the resin constituting the resin layer 112, and is set appropriately in consideration of the heat capacity of the resin of the resin layer 112.

The optical diffraction structure-forming film 110 supplied from the feeding roller 121 is guided by guide rollers 126, 126 to advance to the compressing point αα. As described above, the optical diffraction structure-forming film 110 is heated from the side of the resin layer 112, and the resin layer 112 softens to a degree of performing a forming property at the compressing point αα.

The optical diffraction structure-forming film 110 having the resin layer 112 softened by heating is compressed by the compressing roller 124 onto the embossing roller 122 at the compressing point αα. The compressed optical diffraction structure-forming film 110 is wound on the embossing roller 122 and advances to the peeling point ββ according to the revolution of the embossing roller 122. The pattern of the embossing roller 122 is formed on the resin layer 112 of the optical diffraction structure-forming film 110 wound on the embossing roller 122.

As described above, the optical diffraction structure-forming film 110 advancing to the peeling point ββ, is cooled from the side of the base film 111, and the resin layer 112 hardens to a degree that the resin layer 112 can be peeled at the peeling point ββ. The optical diffraction structure-forming film 110 with an increased peeling property is wound on the peeling roller 125 to be peeled from the embossing roller 122 by. As a result, the optical diffraction structure-forming film 110 is peeled off with almost no residual resin on the embossing roller 122.

The optical diffraction structure-forming film 110 peeled off from the embossing roller 122 is guided by a guide roller 126 to be rolled up on the winding roller 123. As mentioned above, an optical diffraction structure-forming film 110 having the pattern copied from the embossing roller 122 on the resin layer 112 can be produced.

The present invention is not limited to the embodiments described above and may be performed in other embodiments. For example, the region where to be blown by and the direction of the hot air from the hot air-supplying device 130 are not limited to those described above, as long as the resin for the resin layer 112 is heated to a degree of making the resin of the resin layer 112 soften at the compressing point αα. The region where to be blown by and the direction of the cold air from the cold air-supplying device 140 are also not limited to those described above, as long as the resin of the resin layer 112 is cooled to a degree of making the resin of the resin layer 112 harden at the peeling point ββ. A partition plate may be installed between the compressing point αα and the peeling point ββ, not to flow the heated air into the area close to the peeling point ββ or of the cold air into the area close to the compressing point αα.

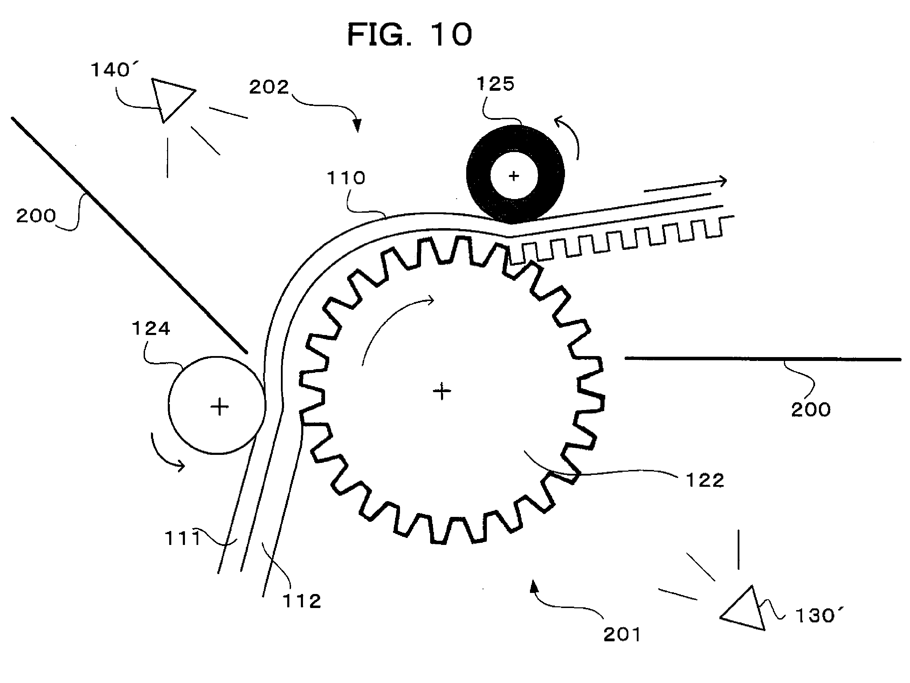

Alternatively, the ambient temperature in the area close to the compressing point αα may be maintained to a degree of making the rein of resin layer 112 soften without blowing of hot air, and the ambient temperature in the area close to the peeling point ββ to a degree of making the resin of resin layer 112 harden without blowing of cold air. In such a case, as shown in Fig. 10, it is preferable to form by installing particular partition plates 200, a chamber 201 for maintaining an ambient temperature at a degree of making the resin of resin layer 112 soften by a heating device 130' and a chamber 202 for maintaining an ambient temperature at a degree of making the resin of the resin layer 112 harden by a cooling device 140' respectively, and to improve a maintaining performance of the ambient temperature in each chamber 201 or 202. The chamber 201 is preferably heated to a temperature approximately 5°C higher than the softening temperature of the resin, while the chamber 202 is cooled to a temperature approximately 5°C lower than the hardening temperature of the resin.

## Claims

1. A pattern copying apparatus of forming on a resin layer having a heat-moldable property, a pattern constituting an optical diffraction structure provided on an outer circumference of an embossing roller, by heating the embossing roller, winding on the embossing roller, an optical diffraction structure-forming film having the resin layer laminated on a base film, and peeling off the optical diffraction structure-forming film from the embossing roller as winding the optical diffraction structure-forming film on the peeling roller, wherein
the apparatus comprises a cooling device for cooling at least part of the outer circumference of the peeling roller so that the surface temperature of the peeling roller is set to or below the temperature to make the resin layer harden.

2. The pattern copying apparatus according to Claim 1, wherein the cooling device is a support roller being cooled and being installed in contact with the outer circumference of the peeling roller.

3. The pattern copying apparatus according to Claim 1 or 2, wherein the cooling device is a cold air-cooling device which blows cold air onto the outer circumference of the peeling roller.

4. A peeling roller that is installed in a pattern copying apparatus of forming on a heat-moldable resin layer, a pattern constituting an optical diffraction structure provided on an outer circumference of an embossing roller, by heating the embossing roller, winding on the embossing roller, an optical diffraction structure-forming film having the resin layer laminated on a base film, and that makes the optical diffraction structure-forming film peel off from the embossing roller by winding thereon, while being cooled from inside thereof with a refrigerant,
wherein a surface temperature of the peeling roller is controlled to or below a temperature to make the resin layer harden under a condition of a temperature of the refrigerant being at and above a degree that the piping is not frozen.

5. The peeling roller according to Claim 4, wherein a surface of the outer circumference is constituted by metal so that the surface temperature is set to or below the temperature to make the resin layer harden.

6. The peeling roller according to Claim 4, wherein thickness of resin constituting the outer circumference is made to be thin so that the surface temperature is set to or below the temperature to make the resin layer harden.

7. A pattern copying method of forming on a resin layer having a heat-moldable property, a pattern constituting an optical diffraction structure provided on the outer circumference of an embossing roller, by winding an optical diffraction structure-forming film having the resin layer laminated on a base film on the embossing roller in a state that the resin layer is softened by heating, and peeling off the wound optical diffraction structure-forming film from the embossing roller,
wherein the optical diffraction structure-forming film is heated in a non-contact way by a heating device so that the resin softens at a moment when the optical diffraction structure-forming film is wound on the embossing roller and
the optical diffraction structure-forming film is cooled in a non-contact way by a cooling device so that the resin hardens at a moment when the optical diffraction structure-forming film is peeled off from the embossing roller.

8. The pattern copying method according to Claim 7, wherein an ambient temperature of the optical diffraction structure-forming film at a moment when the optical diffraction structure-forming film is wound on the embossing roller is set to or above the temperature to make the resin soften by the heating device and
an ambient temperature of the optical diffraction structure-forming film at a moment when the optical diffraction structure-forming film is peeled off from the embossing roller is set to or below the temperature to make the resin harden by the cooling device.

9. The pattern copying method according to Claim 8, wherein the resin is softened by blowing of hot air by the heating device to the optical diffraction structure-forming film at a moment of being wound on the embossing roller, and the resin is hardened by blowing of cold air by the cooling device to the optical diffraction structure-forming film at a moment of being peeled off from the embossing roller.

10. The pattern copying method according to Claim 9, wherein the temperature of the hot air to be blown is 5°C to 10°C higher than a softening temperature of the resin and the temperature of the cold air to be blown is 5°C to 10°C lower than a softening temperature of the resin.

11. A pattern copying apparatus of forming on a resin layer having a heat-moldable property, a pattern constituting an optical diffraction structure provided on the outer circumference of an embossing roller, by winding an optical diffraction structure-forming film having the resin layer laminated on a base film on the embossing roller in a state that the resin layer is softened by heating, and peeling off the wound optical diffraction structure-forming film from the embossing roller, the apparatus comprising
a heating device of heating the optical diffraction structure-forming film in a non-contact way so that the resin softens at a moment when the optical diffraction structure-forming film is wound on the embossing roller and
a cooling device of cooling the optical diffraction structure-forming film in a non-contact way so that the resin hardens at a moment when the optical diffraction structure-forming film is peeled off from the embossing roller.

## Amended claims

### Amended claims under Art. 19.1 PCT

**1.** A pattern copying apparatus of forming on a resin layer having a heat-moldable property, a pattern constituting an optical diffraction structure provided on an outer circumference of an embossing roller, by heating the embossing roller, winding and thermopressing on the embossing roller by a thermopressing roller, an optical diffraction structure-forming film having the resin layer laminated on a base film, and peeling off the optical diffraction structure-forming film from the embossing roller as winding the optical diffraction structure-forming film on the peeling roller, wherein
the apparatus comprises a cooling device for cooling at least part of the outer circumference of the peeling roller so that the surface temperature of the peeling roller is set to or below the temperature to make the resin layer harden.

**2.** The pattern copying apparatus according to Claim 1, wherein the cooling device is a support roller being cooled and being installed in contact with the outer circumference of the peeling roller.

**3.** The pattern copying apparatus according to Claim 1 or 2, wherein the cooling device is a cold air-cooling device which blows cold air onto the outer circumference of the peeling roller.

**4.** A peeling roller that is installed in a pattern copying apparatus of forming on a heat-moldable resin layer, a pattern constituting an optical diffraction structure provided on an outer circumference of an embossing roller, by heating the embossing roller, winding and thermopressing on the embossing roller by a thermocompressing roller, an optical diffraction structure-forming film having the resin layer laminated on a base film, and that makes the optical diffraction structure-forming film peel off from the embossing roller by winding thereon, while being cooled from inside thereof with a refrigerant,
wherein a surface temperature of the peeling roller is controlled to or below a temperature to make the resin layer harden under a condition of a temperature of the refrigerant being at and above a degree that the piping is not frozen.

**5.** The peeling roller according to Claim 4, wherein a surface of the outer circumference is constituted by metal so that the surface temperature is set to or below the temperature to make the resin layer harden.

**6.** The peeling roller according to Claim 4, wherein thickness of resin constituting the outer circumference is made to be thin so that the surface temperature is set to or below the temperature to make the resin layer harden.

**7.** A pattern copying method of forming on a resin layer having a heat-moldable property, a pattern constituting an optical diffraction structure provided on the outer circumference of an embossing roller, by winding an optical diffraction structure-forming film having the resin layer laminated on a base film on the embossing roller in a state that the resin layer is softened by heating, and peeling off the wound optical diffraction structure-forming film from the embossing roller,
wherein the optical diffraction structure-forming film is heated in a non-contact way by a heating device so that the resin softens at a moment when the optical diffraction structure-forming film is wound on the embossing roller and
the optical diffraction structure-forming film is cooled in a non-contact way by a cooling device so that the resin hardens at a moment when the optical diffraction structure-forming film is peeled off from the embossing roller.

**8.** The pattern copying method according to Claim 7, wherein an ambient temperature of the optical diffraction structure-forming film at a moment when the optical diffraction structure-forming film is wound on the embossing roller is set to or above the temperature to make the resin soften by the heating device and
an ambient temperature of the optical diffraction structure-forming film at a moment when the optical diffraction structure-forming film is peeled off from the embossing roller is set to or below the temperature to make the resin harden by the cooling device.

**9.** The pattern copying method according to Claim 8, wherein the resin is softened by blowing of hot air by the heating device to the optical diffraction structure-forming film at a moment of being wound on the embossing roller, and the resin is hardened by blowing of cold air by the cooling device to the optical diffraction structure-forming film at a moment of being peeled off from the embossing roller.

**10.** The pattern copying method according to Claim 9, wherein the temperature of the hot air to be blown is 5°C to 10°C higher than a softening temperature of the resin and the temperature of the cold air to be blown is 5°C to 10°C lower than a softening temperature of the resin.

**11.** A pattern copying apparatus of forming on a resin layer having a heat-moldable property, a pattern constituting an optical diffraction structure provided on the outer circumference of an embossing roller, by winding an optical diffraction structure-forming film having the resin layer laminated on a base film on the embossing roller in a state that the resin layer is softened by heating, and peeling off the wound optical diffraction structure-forming film from the embossing roller, the apparatus comprising
a heating device of heating the optical diffraction structure-forming film in a non-contact way so that the resin softens at a moment when the optical diffraction structure-forming film is wound on the embossing roller and
a cooling device of cooling the optical diffraction structure-forming film in a non-contact way so that the resin hardens at a moment when the optical diffraction structure-forming film is peeled off from the embossing roller.
